# EUROPEAN PATENT APPLICATION

(11) **EP 3 276 508 A1**
(43) Date of publication of application: **31.01.2018**
(21) Application number: 17182594.6
(22) Date of filing: 21.07.2017
(51) Int. Cl.: G06F 17/30, G06F 9/44

(54) **DATABASE CONTROL METHOD, DATABASE CONTROL APPARATUS, AND INFORMATION PROCESSING PROGRAM**

(30) Priority: 25.07.2016 JP 2016145134
(71) Applicant: Fujitsu Limited, Kawasaki-shi, Kanagawa 211-8588 (JP)
(72) Inventor: Sugizaki, Takashi, Kanagawa, 211-8588 (JP); Takeuchi, Susumu, Kanagawa, 211-8588 (JP); Tanaka, Yuta, Kanagawa, 211-8588 (JP); Magome, Shigeto, Kanagawa, 211-8588 (JP); Kobune, Hiroyuki, Kanagawa, 211-8588 (JP)
(74) Representative: Hoffmann Eitle

(57) **Abstract**

A database control method includes generating a second database in which recorded contents of a first database are copied, when detecting an update program for updating a first control program configured to control the first database set as a transmission destination of a request for processing transmitted by a terminal apparatus; generating a second control program by updating the first control program using the update program; setting the transmission destination to both the first database and the second database; executing the processing on the first database using the first control program; executing the processing on the second database using the second control program; setting the transmission destination to the second database when a first result of the processing on the first database and a second result of the processing on the second database match; and executing processing on the second database using the second control program when receiving the request.

## Description

### FIELD

The embodiment discussed herein is related to a database control method, a database control apparatus, and an information processing program.

### BACKGROUND

When a control program of a related art operational database is updated, a person such as an administrator verifies whether the update is done normally.

An access request for the database is captured in this verification. The captured access request is then replayed in a for-verification database, which operates in accordance with the updated control program, and the result of replay is used for the verification of whether the update is done normally. As for the related art, Japanese Laid-open Patent Publication No. 2001-202101 and International Publication Pamphlet No. WO 2011/042961 have been disclosed, for example.

### SUMMARY

### [TECHNICAL PROBLEM]

The above related art verification has been however complex since various works such as capturing and replaying an access request have to be performed prior to the verification. In view of the above, it is desired to achieve easy evaluation of effects on a database given by applying an update program.

### [SOLUTION TO PROBLEM]

According to an aspect of the invention, a database control method executed by a processor included in a control apparatus coupled to a terminal apparatus, the database control method includes generating a second database in which recorded contents of a first database are copied, when detecting an update program which is used to update a first control program configured to control the first database set as a transmission destination of a request for processing transmitted by the terminal apparatus; generating a second control program by updating the first control program using the update program; setting the transmission destination of the request to both the first database and the second database; executing the processing on the first database using the first control program; executing the processing on the second database using the second control program; setting the transmission destination to only the second database among the first database and the second database when a first result of the processing on the first database and a second result of the processing on the second database match; and executing processing on the second database using the second control program when receiving the request from the terminal apparatus.

### [ADVANTAGEOUS EFFECTS OF INVENTION]

In an aspect, it is possible to achieve easy evaluation of effects on a database given by applying an update program.

### BRIEF DESCRIPTION OF DRAWINGS

FIG. 1 is a diagram describing an outline of a database control apparatus of an embodiment;
FIG. 2 is a diagram illustrating an example of a hardware configuration of the database control apparatus;
FIGs. 3A and 3B are diagrams respectively illustrating examples of databases that each belong to a database service section and a for-verification database service section;
FIG. 4 is a diagram describing functions of a database control processor;
FIG. 5 is a diagram describing functions of a consistency evaluation unit;
FIG. 6 is a flowchart describing processing of the database control processor;
FIG. 7 is a flowchart describing processing of the consistency evaluation unit;
FIGs. 8A, 8B, and 8C are diagrams describing processing of the database control processor;
FIGs. 9A, 9B, and 9C are diagrams describing processing of the consistency evaluation unit; and
FIGs. 10A and 10B are diagrams respectively illustrating display examples.

### DESCRIPTION OF EMBODIMENTS

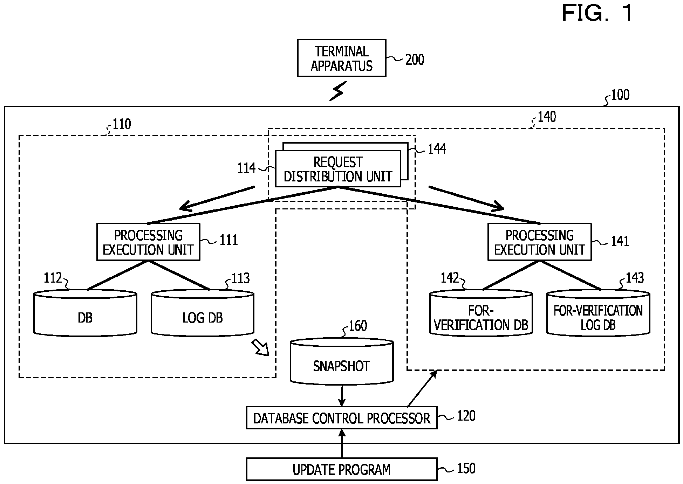

Hereinafter, descriptions are given for an embodiment with reference to the drawings. FIG. 1 is a diagram describing an outline of a database control apparatus of the embodiment.

A database control apparatus 100 of the embodiment includes a database service section 110 and a database control processor 120.

The database service section 110 of the embodiment includes a processing execution unit 111, a database 112, a log database 113, and a request distribution unit 114. Upon receiving an execution request for processing on the database 112, the database service section 110 allows the request distribution unit 114 to distribute the execution request (access request) to the processing execution unit 111. The processing execution unit 111 then outputs a result of executing the control program. The log database 113 stores log information that represents a history of processing of the processing execution unit 111.

Upon detecting an update program 150 of a control program, which achieves processing on the database 112, the database control processor 120 of the embodiment generates a for-verification database service section 140 in the database service section 110.

The for-verification database service section 140 includes a for-verification processing execution unit 141, a for-verification database 142, a for-verification log database 143, and a for-verification request distribution unit 144. The for-verification processing execution unit 141 executes processing on the for-verification database 142 in accordance with an updated control program, which is the control program of the database service section 110 updated by the update program 150.

The for-verification database 142 is generated from a snapshot 160, which is information representing an operation state of the database 112. In other words, the for-verification database 142 is a copy of the database 112 at the generation of the for-verification database service section 140. The for-verification log database 143 is a copy of the log database 113.

The for-verification request distribution unit 144 has the same function as that of the request distribution unit 114. After the database service section 110 is deleted by the later-described processing, the request distribution unit 114 is replaced with the for-verification request distribution unit 144.

Upon receiving the processing execution request after generating the for-verification database service section 140, the database control processor 120 allows the request distribution unit 114 to distribute the processing execution request to both the database service section 110 and the for-verification database service section 140. The database control processor 120 then obtains results of processing execution from both the database service section 110 and the for-verification database service section 140, and compares the results.

The database control processor 120 uses the comparison results to evaluate whether the processing results are consistent after the update of the control program.

With the above processing, the embodiment achieves easy evaluation of effects on the database given by applying the update program.

When the processing results are consistent, the database control processor 120 of the embodiment deletes the database service section 110 and sets the updated for-verification database service section 140 instead of the database service section 110. When the processing results are inconsistent, the database control processor 120 may delete the for-verification database service section 140.

Although the database service section that provides a processing result corresponding to an execution request for processing on the database in the database control apparatus 100 is only the database service section 110 in the example of FIG. 1, it is not limited thereto. The database control apparatus 100 may have multiple database service sections. In that case, upon updating control programs, the database control processor 120 of the embodiment executes the same processing as that executed on the database service section 110 on the multiple database service sections.

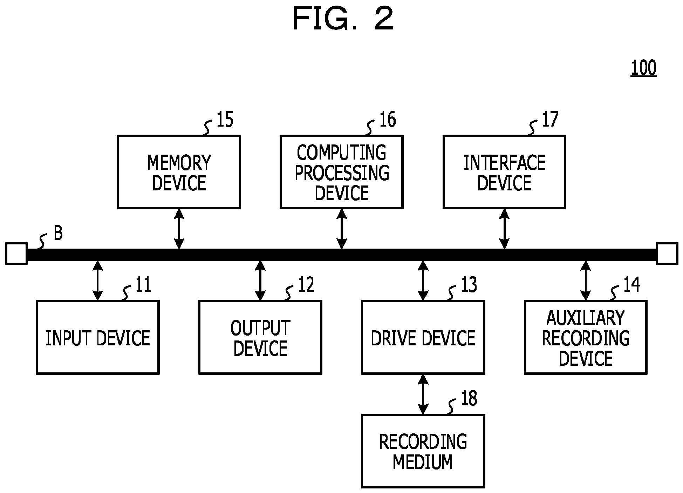

A description is given below for the database control apparatus 100 of the embodiment. FIG. 2 is a diagram illustrating an example of a hardware configuration of the database control apparatus.

The database control apparatus 100 of the embodiment includes an input device 11, an output device 12, a drive device 13, an auxiliary recording device 14, a memory device 15, a computing processing device 16, and an interface device 17, while these devices are coupled to each other via a bus B.

The input device 11 is for inputting various pieces of information and is implemented by a keyboard, a mouse, or the like, for example. The output device 12 is for outputting various pieces of information and is implemented by a display or the like, for example. The interface device 17 is used for coupling to the network and includes a modem, a LAN card, and the like.

The database control program is at least part of various programs controlling the database control apparatus 100. The database control program is provided through distribution of a recording medium 18 or by downloading from the network, for example. The recording medium 18 that records the database control program may be various types; which may be a recording medium such as a CD-ROM, a flexible disk, a magnetic optical disk, or the like that records information optically, electrically, or magnetically, or may be a semiconductor memory such as a ROM, a flash memory, or the like that records information electrically.

Once the recording medium 18 that records the database control program is set in the drive device 13, the database control program is installed from the recording medium 18 into the auxiliary recording device 14 via the drive device 13. The database control program downloaded from the network is installed into the auxiliary recording device 14 via the interface device 17.

The auxiliary recording device 14 stores the installed database control program while storing requisite files, data, and the like. When the computer is activated, the memory device 15 reads the database control program from the auxiliary recording device 14 and stores the program. The computing processing device 16 then executes the later-described various pieces of processing in accordance with the database control program stored in the memory device 15.

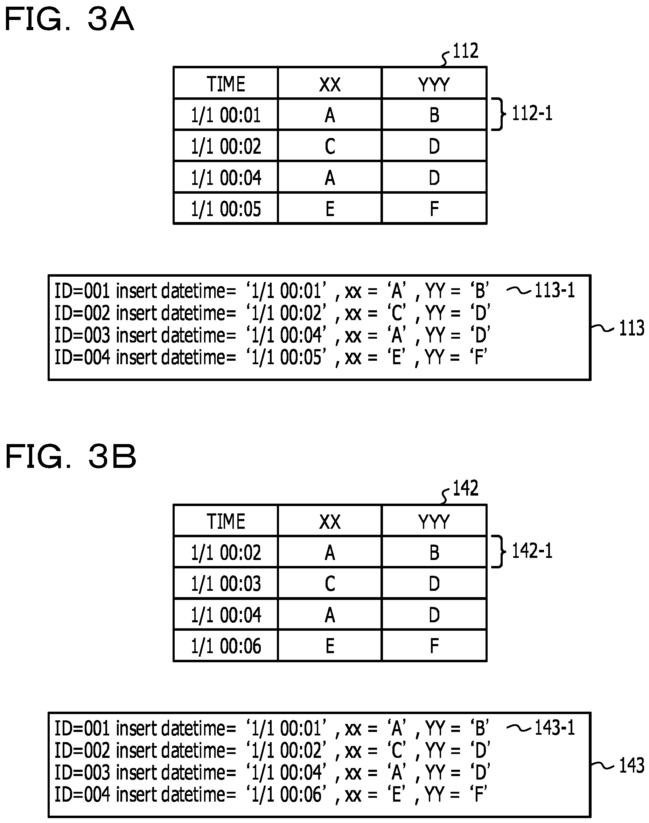

Referring to FIGs. 3A and 3B, descriptions are given below for the database 112 and the log database 113 of the database service section 110 and the for-verification database 142 and the for-verification log database 143 of the for-verification database service section 140.

FIGs. 3A and 3B are diagrams respectively illustrating examples of databases that each belong to the database service section and the for-verification database service section. FIG. 3A is a diagram illustrating an example of each database of the database service section 110. FIG. 3B is a diagram illustrating an example of each database of the for-verification database service section 140.

The database 112 in FIG. 3A has information items: time, XX, and YY. A value of the item "time" is time information representing a time when values of the items "XX" and "YY" are obtained. The values of the items "XX" and "YY" are values of the results of processing execution in accordance with the execution request. In the descriptions below, each set of information including the values of each item "time", "XX", and "YY" in the database 112 is called processing result information.

The log database 113 stores log information that represents a history of the processing executed on the database 112. The log information includes information items: ID, insert datetime, a value of the item "XX", and a value of the item "YY". A value of the item "ID" represents an identifier of the log information. A value of the item "insert datetime" represents the time when the data is inputted to the database 112. In other words, the value of the item "insert datetime" is a time stamp representing the time when the values of the items "XX" and "YY" are inputted. Thus, the time stamp matches the value of the item "time" included in the processing result information.

Like the database 112, the for-verification database 142 in FIG. 3B also has information items: time, XX, and YY. A value of the item "time" is a time when values of the items "XX" and "YY" are obtained. Like the case of the log database 113, the log information stored in the for-verification log database 143 also includes ID, which is an identifier of the log information, a time stamp representing the time when the values of the items "XX" and "YY" are inputted, the value of the item "XX", and the value of the item "YY".

Now, for the sets of log information respectively of the log database 113 and the for-verification log database 143, a description is given for the case where the values of the items "ID" match but the times represented by the time stamps differ.

Log information 113-1 of the log database 113 in FIG. 3A is log information in which the ID is "001", the time represented by the time stamp is "1/1 00:01", the value of the item "XX" is "A", and the value of the item "YY" is "B".

Log information 143-1 of the for-verification log database 143 in FIG. 3B is log information in which the ID is "001", the time represented by the time stamp is "1/1 00:02", the value of the item "XX" is "A", and the value of the item "YY" is "B".

Since the IDs of the log information 113-1 and the log information 143-1 match, it is accordingly understood that these sets of information represent the history of executing the same processing respectively on the database service section 110 and the for-verification database service section 140.

In the database 112, the values of the items "XX" and "YY" of processing result information 112-1 are the values of the items "XX" and "YY" corresponding to the log information 113-1. The value of the item "time" of the processing result information 112-1 matches the time stamp "1/1 00:01" of the log information 113-1. It is accordingly understood that the processing result information 112-1 corresponds to the log information 113-1.

In the for-verification database 142, the values of the items "XX" and "YY" of processing result information 142-1 are the values of the items "XX" and "YY" corresponding to the log information 143-1. The value of the item "time" of the processing result information 142-1 matches the time stamp "1/1 00:02" of the log information 143-1. It is accordingly understood that the processing result information 142-1 corresponds to the log information 143-1.

Here, although the results are obtained by executing the same processing, the values of the items "time" of the processing result information 112-1 and the processing result information 142-1 do not match.

This time difference occurs because of the nature of the network from when the processing execution request is distributed by the request distribution unit 114 until when the processing is actually executed.

In the embodiment, this time difference is corrected, whereby the times are matched by the later-described processing of the database control processor 120, and thereafter, the consistency of the sets of processing result information of the database 112 and the for-verification database 142 is verified.

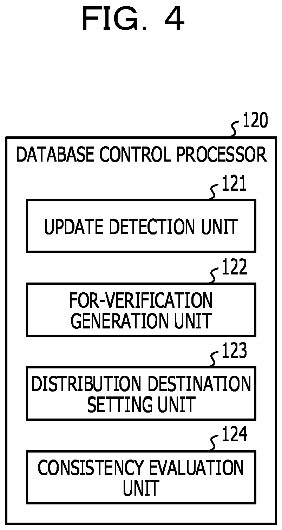

Next, referring to FIG. 4, a description is given for functions of the database control processor 120 of the embodiment. FIG. 4 is a diagram describing the functions of the database control processor. The database control processor 120 of the embodiment is implemented with execution of the database control program, which is stored in the memory device 15 or the like, by the computing processing device 16 of the database control apparatus 100.

The database control processor 120 of the embodiment includes an update detection unit 121, a for-verification generation unit 122, a distribution destination setting unit 123, and a consistency evaluation unit 124.

The update detection unit 121 of the embodiment detects input of the update program 150, which is used for updating the control program implementing the processing execution unit 111. The update program of the embodiment is a patch applied to the control program, a program that upgrades the control program, or the like, for example. The update program 150 may be given by the administrator and the like of the database control apparatus 100, or may be distributed from an external apparatus coupled to the database control apparatus 100, for example.

Upon detecting the update program, the for-verification generation unit 122 of the embodiment generates in the database service section 110 the for-verification database service section 140, which is used for verification of effects on the database 112 given by applying the update program. In other words, the for-verification generation unit 122 generates the for-verification database service section 140 for determining whether the update program is applicable.

The for-verification generation unit 122 specifically generates the updated control program that is the control program updated by the update program. In the embodiment, the for-verification processing execution unit 141 is implemented by executing the updated control program.

The for-verification generation unit 122 obtains the snapshot 160 indicating a state of the database 112. Then, the for-verification generation unit 122 generates the for-verification database 142, which has a copy of the recorded contents of the database 112, based on the snapshot 160. The for-verification generation unit 122 generates the for-verification log database 143, which has a copy of the recorded contents of the log database 113. The for-verification generation unit 122 generates the for-verification request distribution unit 144, which has the same functions as that of the request distribution unit 114.

Upon generation of the for-verification database service section 140, the distribution destination setting unit 123 allows the request distribution unit 114 to distribute the received processing execution request to both the database service section 110 and the for-verification database service section 140. In the embodiment, the for-verification request distribution unit 144 of the for-verification database service section 140 may be allowed to distribute the processing execution request.

The consistency evaluation unit 124 of the embodiment compares the results of the processing executed in both the database service section 110 and the for-verification database service section 140 and evaluates the consistency of the results. The consistency evaluation unit 124 specifically compares the processing result information stored in the database 112 and the processing result information stored in the for-verification database 142 and determines whether their sets of information match. Then, when all the compared sets of processing result information match, the consistency evaluation unit 124 deletes the database service section 110. The consistency evaluation unit 124 thereafter sets the updated for-verification database service section 140 instead of the database service section 110.

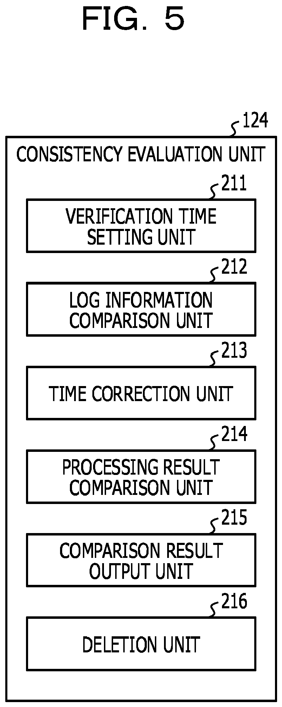

Referring to FIG. 5, a description is given for functions of the consistency evaluation unit 124 of the embodiment. FIG. 5 is a diagram describing functions of the consistency evaluation unit.

The consistency evaluation unit 124 of the embodiment includes a verification time setting unit 211, a log information comparison unit 212, a time correction unit 213, a processing result comparison unit 214, a comparison result output unit 215, and a deletion unit 216.

The verification time setting unit 211 of the embodiment sets a verification time for performing verification. In other words, the verification time setting unit 211 sets a term of executing processing in both the database service section 110 and the for-verification database service section 140. The verification time may be set by the administrator and the like of the database control apparatus 100, for example. The verification time is preferably set to a time during which a new update program is not issued, for example. The verification time may specifically be few hours, for example.

The log information comparison unit 212 compares the sets of log information respectively stored in the log database 113 and the for-verification log database 143. The log information comparison unit 212 specifically compares the time stamps respectively included in the two sets of log information.

When the two time stamps do not match, the time correction unit 213 rewrites the value of the item "time" in the processing result information, which corresponds to the log information in the for-verification database 142, to the time that is represented by the time stamp included in the log information obtained from the log database 113.

The processing result comparison unit 214 compares the processing result information stored in the database 112 and the processing result information stored in the for-verification database 142. In other words, the processing result comparison unit 214 compares values of the result of processing execution by the database service section 110 and values of the result of processing execution by the for-verification database service section 140.

The comparison result output unit 215 outputs the comparison result obtained by the processing result comparison unit 214. Specifically, when the two values of the processing results match for example, the comparison result output unit 215 may output a message or the like which notifies of replacement of the for-verification database service section 140 with the database service section 110. When the two values of the processing results do not match for example, the comparison result output unit 215 may output a message or the like which asks for cancellation of application of the update program.

The deletion unit 216 deletes the database service section 110 or the for-verification database service section 140.

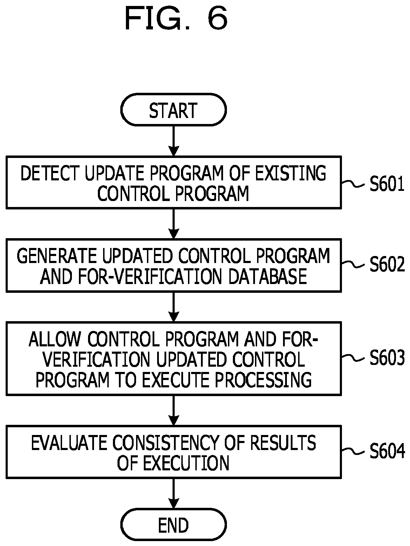

Next, referring to FIG. 6, a description is given for operation of the database control processor 120 of the embodiment. FIG. 6 is a flowchart describing operation of the database control processor.

The database control processor 120 of the embodiment allows the update detection unit 121 to detect the update program of the existing control program (S601). The database control processor 120 subsequently allows the for-verification generation unit 122 to generate the updated control program, which is updated by the update program. The for-verification generation unit 122 generates the for-verification database 142 and the for-verification log database 143 from the database 112 and the log database 113, respectively. The for-verification generation unit 122 generates the for-verification request distribution unit 144 (S602). In other words, the for-verification generation unit 122 generates the for-verification database service section 140.

Upon input of the processing execution request to the database control apparatus 100, the database control processor 120 subsequently allows the distribution destination setting unit 123 to distribute this execution request to the database service section 110 and the for-verification database service section 140 (S603). In other words, upon input of the processing execution request, the distribution destination setting unit 123 allows both the control program and the updated control program to execute the processing.

The database control processor 120 subsequently allows the consistency evaluation unit 124 to evaluate the consistency of the results of processing respectively executed by the control program and the updated control program (S604), then ends the processing.

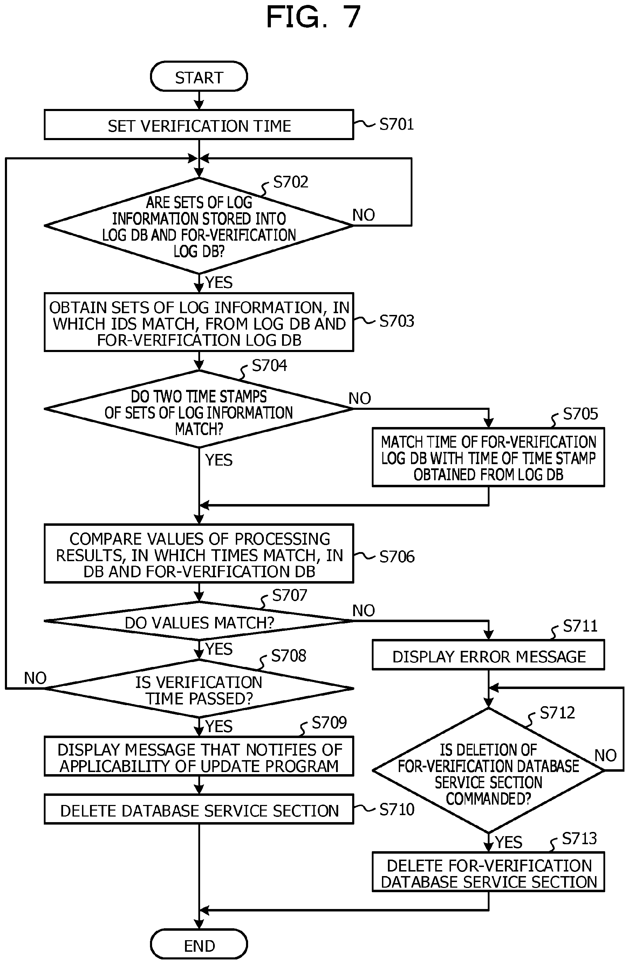

Next, referring to FIG. 7, a description is given for processing of the consistency evaluation unit 124 of the embodiment. FIG. 7 is a flowchart describing processing of the consistency evaluation unit.

Upon generation of the for-verification database service section 140, the consistency evaluation unit 124 of the embodiment allows the verification time setting unit 211 to set the verification time (S701).

The consistency evaluation unit 124 subsequently allows the log information comparison unit 212 to determine whether new sets of log information are respectively stored in the log database 113 and the for-verification log database 143 (S702). In other words, the consistency evaluation unit 124 determines whether the processing is executed in the database service section 110 and the for-verification database service section 140 when both are notified of the processing execution request.

When no new sets of log information are stored in S702, the consistency evaluation unit 124 waits until new sets of log information are stored.

When new sets of log information are stored in S702, the log information comparison unit 212 obtains sets of log information, in which their IDs match, respectively from the log database 113 and the for-verification log database 143 (S703). The log information comparison unit 212 subsequently determines whether the time stamps included in the obtained two sets of log information match (S704).

When the time stamps do not match in S704, the consistency evaluation unit 124 allows the time correction unit 213 to correct the time included in the processing result information of the for-verification database 142 (S705), then proceeds to later-described S706.

A description is given below for processing in S705.

The time correction unit 213 obtains the time stamp included in the log information, which is obtained from the for-verification log database 143 in S703. The time correction unit 213 subsequently specifies the processing result information, in which the obtained time stamp and the value of the item "time" match, from the for-verification database 142. The time correction unit 213 then replaces the value of the item "time" of the processing result information specified from the for-verification database 142 with the time represented by the time stamp, which is included in the log information obtained from the log database 113 in S703.

When the time stamps match in S704, the consistency evaluation unit 124 compares the values of the processing results of the database 112 and the for-verification database 142 by the processing result comparison unit 214 (S706).

A description is given below for processing in S706.

The processing result comparison unit 214 specifies the sets of processing result information in which the values of the items "time" match the time stamp, which is included in the log information obtained in S703, from the database 112 and the for-verification database 142, respectively. The processing result comparison unit 214 then compares the values of the items "XX" and "YY" included in each set of the specified processing result information.

The consistency evaluation unit 124 subsequently determines whether the comparison results match (S707). When the comparison results do not match in S707, the consistency evaluation unit 124 proceeds to later-described S711.

When the comparison results match in S707, the consistency evaluation unit 124 determines whether the verification time is already passed (S708). When the verification time is not passed yet in S708, the consistency evaluation unit 124 returns to S702.

When the verification time is already passed in S708, the consistency evaluation unit 124 allows the comparison result output unit 215 to display a message, which indicates that the update program is applicable, on a display unit or the like of the database control apparatus 100 (S709).

The consistency evaluation unit 124 subsequently allows the deletion unit 216 to delete the database service section 110 (S710), then ends the processing.

The consistency evaluation unit 124 may allow the comparison result output unit 215 to display a screen for choosing whether to delete the database service section 110 and to execute deletion of the database service section 110 when "delete" is chosen.

When the comparison results do not match in S707, the consistency evaluation unit 124 allows the comparison result output unit 215 to display an error message, which indicates that the results of processing of the pre-update control program and processing of the post-update control program do not match (S711).

The consistency evaluation unit 124 subsequently determines whether deletion of the for-verification database service section 140 is commanded (S712). When no command of deletion is in S712, the consistency evaluation unit 124 waits until deletion is commanded.

When deletion is commanded in S712, the consistency evaluation unit 124 allows the deletion unit 216 to delete the for-verification database service section 140 (S713), then ends the processing.

As described above, in the embodiment, evaluation of consistency of the processing results of both the database service section 110 and the for-verification database service section 140 is achieved every time the both execute the processing.

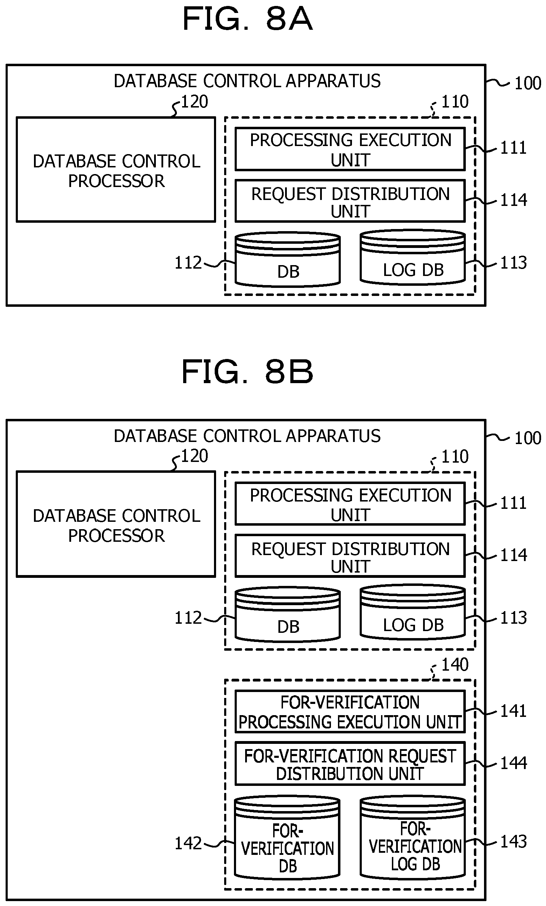

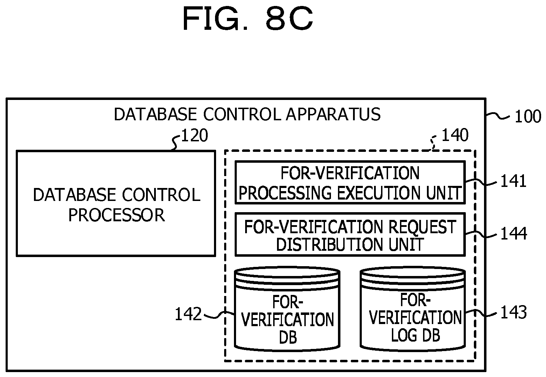

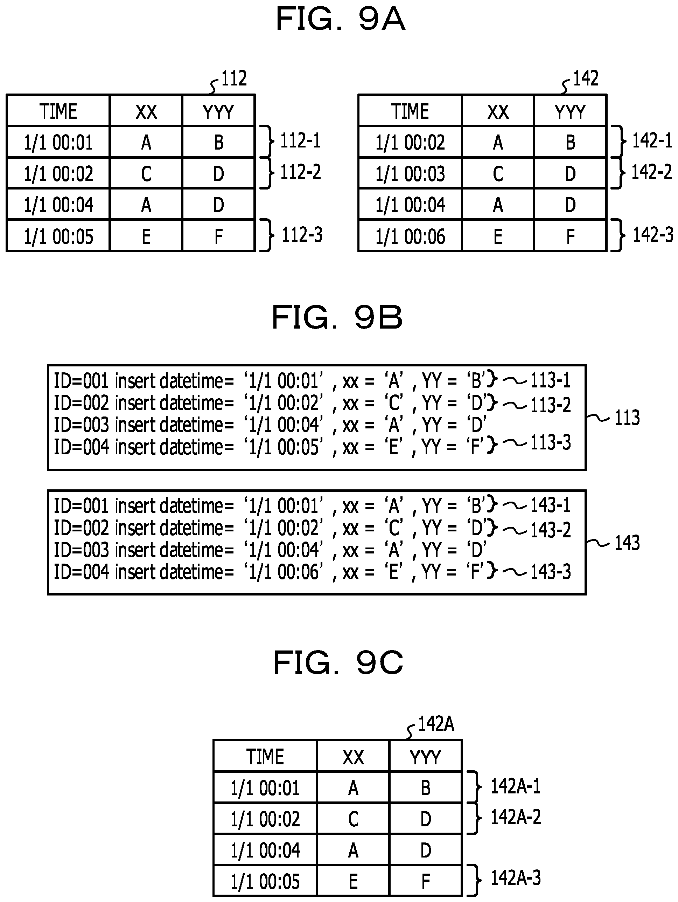

Referring to FIGs. 8A, 8B, 8C, 9A, 9B, and 9C, a further description is given for the processing of the database control processor 120.

FIGs. 8A, 8B, and 8C are diagrams describing the processing of the database control processor. FIG. 8A is a diagram illustrating a state of the database control apparatus 100 before detecting the update program. FIG. 8B is a diagram illustrating a state of the database control apparatus 100 after detecting the update program. FIG. 8C is a diagram illustrating a state of the database control apparatus 100 after the control program is updated.

In the state illustrated in FIG. 8A, the database control apparatus 100 includes the database control processor 120 and the database service section 110. At this time, upon receiving the processing execution request, the database service section 110 executes the processing of the processing execution unit 111, which is implemented by the control program. The database service section 110 then stores the processing result information and the log information into the database 112 and the log database 113, respectively.

In the state illustrated in FIG. 8A, upon detecting the update program 150, which is used for updating the control program, the database control processor 120 generates the for-verification database service section 140. The state of the database control apparatus 100 accordingly turns into what illustrated in FIG. 8B.

Upon receiving the processing execution request, the database control apparatus 100 in the state in FIG. 8B sets destinations for transmitting this execution request to both the database service section 110 and the for-verification database service section 140. In other words, the database control processor 120 sets destinations for transmitting the processing execution request to the database 112 and the for-verification database 142, respectively.

For the database service section 110 and the for-verification database service section 140, upon storing both the processing result information and the log information into each database service section, the database control processor 120 determines consistency of the sets of processing result information, respectively. That is, the database control processor 120 determines whether these sets of processing result information respectively stored into the database 112 and the for-verification database 142 match.

Every time receiving the execution request, the database control apparatus 100 of the embodiment in the state in FIG. 8B transmits the received execution request to both the database service section 110 and the for-verification database service section 140. The database control processor 120 then compares the processing result information stored in the database 112 and the processing result information stored in the for-verification database 142 and, every time the processing is executed based on the execution request, determines whether they match.

In the embodiment, the above-described processing of determining consistency is performed during the verification time set in advance.

When the two sets of processing result information as a target for comparison do not match in the state in FIG. 8B, the database control processor 120 deletes the for-verification database service section 140 and makes the database control apparatus 100 back to the state in FIG. 8A even if the verification time is not passed yet.

The case where the two sets of processing result information do not match represents that it is unable to obtain the processing result which is the same as that before the update because of updating the control program. Thus, when the sets of the processing result information do not match, the embodiment deletes the for-verification database service section 140 so that the for-verification database service section 140 will not be updated.

In the state in FIG. 8B, when there are no sets of processing result information that do not match, that is, when all the two sets of processing result information compared within the verification time match, until the verification time is passed, the state of the database control apparatus 100 turns into what in FIG. 8C.

The database control apparatus 100 illustrated in FIG. 8C includes the database control processor 120 and the for-verification database service section 140, while the database service section 110 is deleted. That is, in the database control apparatus 100 in FIG. 8C, the database service section 110 is replaced with the for-verification database service section 140, which is a post-update environment.

In this case, upon receiving the processing execution request, the database control processor 120 transmits this execution request to the for-verification database service section 140 and allows the processing execution unit 141 to execute the processing.

As described above, according to the embodiment, upon detecting the update of the control program controlling the database, the updated control program and the verification database are automatically generated. Also, in the embodiment, consistency of the processing result in a pre-update environment and the processing result in the post-update environment is automatically evaluated. When they are consistent, the pre-update environment is deleted and replaced with the post-update environment.

Thus, the embodiment achieves omission of verification performed by the database administrator and easy evaluation of effects on the database given by applying the update program.

Next, referring to FIGs. 9A, 9B, and 9C, a further description is given for the processing of the consistency evaluation unit 124. FIGs. 9A, 9B, and 9C are diagrams describing the processing of the consistency evaluation unit. FIG. 9A illustrates the database 112 and the for-verification database 142. FIG. 9B illustrates the log database 113 and the for-verification log database 143. FIG. 9C illustrates the for-verification database 142 in which the corrected sets of processing result information are stored.

In FIG. 9A, the processing result information 112-1 of the database 112 and the processing result information 142-1 of the for-verification database 142 represent the results of processing execution in accordance with the same execution request. Processing result information 112-2 of the database 112 and processing result information 142-2 of the for-verification database 142 represent the results of processing execution in accordance with the same execution request. Further, processing result information 112-3 of the database 112 and processing result information 142-3 of the for-verification database 142 represent the results of processing execution in accordance with the same execution request.

In FIG. 9A, the values of the items "time" of the processing result information 112-1 and the processing result information 142-1 are "1/1 00:01" and "1/1 00:02", respectively; that is, the values differ. Likewise, for the processing result information 112-2 and the processing result information 142-2 as well as the processing result information 112-3 and the processing result information 142-3, the values of the items "time" differ.

When the values of the items "time" in the two sets of processing result information differ as described above, determination on these two sets of processing result information that they are different may be made at comparison performed by the processing result comparison unit 214. This leads wrong determination that they are not consistent.

Thus, the time correction unit 213 in the embodiment matches up the values of the items "time" of the two sets of processing result information with reference to the sets of log information.

In FIG. 9B, log information 113-1 indicates that the processing result information 112-1 is stored into the database 112. Log information 113-2 indicates that the processing result information 112-2 is stored into the database 112. Log information 113-3 indicates that the processing result information 112-3 is stored into the database 112.

In FIG. 9B, log information 143-1 indicates that the processing result information 142-1 is stored into the verification database 142. Log information 143-2 indicates that the processing result information 142-2 is stored into the for-verification database 142. Log information 143-3 indicates that the processing result information 142-3 is stored into the for-verification database 142.

A description is given below for the case of determining consistency of the processing result information 112-1 and the processing result information 142-1.

The consistency evaluation unit 124 allows the log information comparison unit 212 to obtain the sets of log information, in which their IDs match, respectively from the log database 113 and the for-verification log database 143. Here, the sets of log information 113-1 and 143-1 in which their IDs are "001" are obtained.

Next, the log information comparison unit 212 compares the time stamps included in the sets of log information 113-1 and 143-1. The time stamp included in the log information 113-1 is "1/1 00:01". The time stamp included in the log information 143-1 is "1/1 00:02". They do not match.

Thus, the time correction unit 213 specifies the processing result information 142-1 in which the value of the item "time" matches the time stamp "1/1 00:02" of the log information 143-1, from the for-verification database 142.

The time correction unit 213 subsequently replaces the value of the item "time" included in the processing result information 142-1 with the time stamp "1/1 00:01" of the log information 113-1, and thus the processing result information 142-1 is replaced with the processing result information 142A-1 illustrated in FIG. 9C.

The consistency evaluation unit 124 subsequently allows the processing result comparison unit 214 to specify the sets of processing result information 112-1 and 142-1, in which the values of the items "time" match, respectively from the database 112 and the for-verification database 142. The consistency evaluation unit 124 then compares the values of the items "XX" and "YY" of those sets of information.

The values of the items "XX" and "YY" of the processing result information 112-1 are "A" and "B", respectively. The values of the items "XX" and "YY" of the processing result information 142-1 are also "A" and "B", respectively. It is accordingly seen that the processing result information 112-1 and the processing result information 142-1 match.

The consistency evaluation unit 124 of the embodiment also replaces the values of the items "time" of the sets of processing result information 142-2 and 142-3, respectively, by the same way, and thus those sets of information are replaced with the sets of processing result information 142A-2 and 142A-3, respectively. The consistency evaluation unit 124 then compares the processing result information 112-2 with the processing result information 142A-2 and the processing result information 112-3 with the processing result information 142A-3, respectively.

As described above, in the embodiment, the difference of time, which is due to the nature of the network, between the processing result information stored in the database 112 and the processing result information stored in the for-verification database 142 is corrected. Thus, a risk of wrong determination of consistency at verification is mitigated.

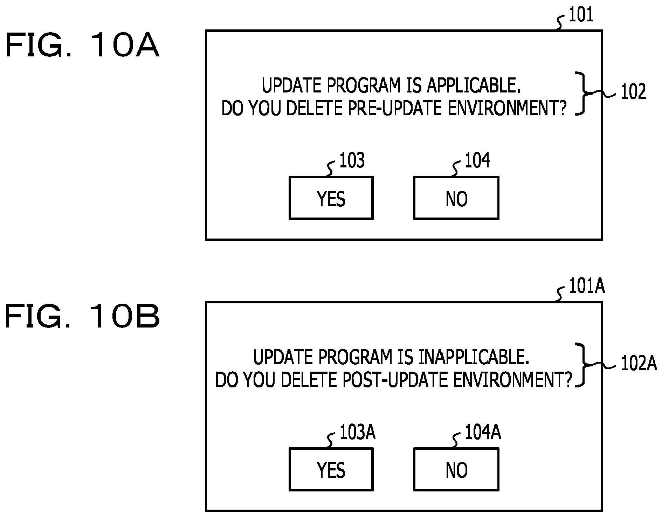

Next, referring to FIGs. 10A and 10B, a description is given for output of the verification result performed by the result output unit 215 of the consistency evaluation unit 124. FIGs. 10A and 10B are diagrams respectively illustrating display examples. FIG. 10A illustrates an example of an image that appears on the display unit of the database control apparatus 100 when all of the sets of processing result information compared within the verification time match. FIG. 10B illustrates an example of an image that appears on the display unit of the database control apparatus 100 when the sets of processing result information do not match.

A screen 101 illustrated in FIG. 10A may appear in S709 in FIG. 7, for example. A message 102 indicating that the update program is applicable and buttons 103 and 104 for choosing whether to delete the database service section 110 are on the screen 101.

When the button 103 is selected for example, the database control processor 120 of the embodiment may allow the deletion unit 216 to delete the database service section 110.

The screen 101A illustrated in FIG. 10B may appear in S711 in FIG. 7, for example. A message 102A indicating that the update program is inapplicable and buttons 103A and 104A for choosing whether to delete the for-verification database service section 140 are on the screen 101A.

The inapplicable update program represents that the processing results of the pre-update environment and the post-update environment are not consistent.

When the button 103A is selected for example, the database control processor 120 of the embodiment may allow the deletion unit 216 to delete the for-verification database service section 140.

In the embodiment, because it is able to delete an environment (database service section) not being used, for example, in a case where using a storage area of the database control apparatus 100 has to be charged, a risk of being charged for the database service section not being used may be migrated.

In the above-described embodiment, after the for-verification database service section 140 is generated by the database control processor 120, the processing result information of the database 112 and the processing result information of the for-verification database 142 are compared every time the processing is executed based on the execution request. However, it is not limited thereto.
In the embodiment, comparison of the processing result information of the database 112 and the processing result information of the for-verification database 142 may be started after a predetermined number of sets of log information are accumulated in the log database 113 and the for-verification log database 143. In the embodiment, when the verification time is passed before the predetermined number of sets of log information are accumulated for example, the verification time may be extended.

## Claims

1. A database control method executed by a processor included in a control apparatus coupled to a terminal apparatus, the database control method comprising:
generating a second database in which recorded contents of a first database are copied, when detecting an update program used to update a first control program configured to control the first database set as a transmission destination of a request for processing transmitted by the terminal apparatus;
generating a second control program by updating the first control program using the update program;
setting the transmission destination of the request to both the first database and the second database;
executing the processing on the first database using the first control program;
executing the processing on the second database using the second control program;
setting the transmission destination to only the second database among the first database and the second database when a first result of the processing on the first database and a second result of the processing on the second database match; and
executing processing on the second database using the second control program when receiving the request from the terminal apparatus.

2. The database control method according to claim 1, wherein
the first result includes first time information indicating a time when the first result is obtained, and a first value of the first result, and
the second result includes second time information indicating a time when the second result is obtained, and a second value of the second result,
wherein the database control method further comprising
executing processing of matching up the second time information with the first time information when the first time information and the second time information differ.

3. The database control method according to any of claims 2, wherein the executing processing of matching the second time information with the first time information includes:
specifying a first time included in first log information, and a second time included in second log information and is the same as the first time, by referring to the first log information indicating a history of operation of the first database and includes the first time information, and to the second log information indicating a history of operation of the second database and includes the second time information, and
determining whether the first result and the second result match by comparing a result corresponding to the first time included in the first result and a result corresponding to the second time included in the second result.

4. The database control method according to any of claims 1 or 2,
wherein the setting the transmission destination to only the second database includes deleting the first database.

5. The database control method according to any of claims 1 or 2, further comprising
deleting the second database when the first result of the processing on the first database and the second result of the processing on the second database do not match.

6. The database control method according to any of claims 1 or 2, further comprising
outputting a result of comparing the first result of the processing on the first database and the second result of the processing on the second database.

7. The database control method according to claim 6,
wherein the outputting includes outputting a message, which notifies of replacing the first database with the second database when the first result of the processing on the first database and the second result of the processing on the second database match.

8. The database control method according to claim 6,
wherein the outputting includes outputting a message, which requests for cancellation of application of the update program when the first result of the processing on the first database and the second result of the processing on the second database do not match.

9. A control apparatus, comprising:
a generation unit configured to:
generate a second database in which recorded contents of a first database are copied, when detecting an update program used to update a first control program configured to control the first database set as a transmission destination of a request for processing transmitted by a terminal apparatus, and
generate a second control program by updating the first control program using the update program;
a setting unit that sets the transmission destination of the request to both the first database and the second database;
a first execution unit that executes the processing on the first database using the first control program; and
a second execution unit that executes the processing on the second database using the second control program,
wherein the setting unit is configured to set the transmission destination to only the second database among the first database and the second database, when a first result of the processing on the first database and a second result of the processing on the second database match, and
the second execution unit is configured to execute processing on the second database using the second control program when receiving the request from the terminal apparatus.

10. The control apparatus according to claim 9, wherein
the first result includes first time information indicating a time when the first result is obtained, and a first value of the first result, and
the second result includes second time information indicating a time when the second result is obtained, and a second value of the second result,
wherein the control apparatus further comprises
a time correction unit that executes processing of matching up the second time information with the first time information when the first time information and the second time information differ.

11. The control apparatus according to any of claims 10, wherein the control apparatus further comprises
a comparison unit configured to:
specify a first time included in first log information, and a second time included in second log information and is the same as the first time, by referring to the first log information indicating a history of operation of the first database and includes the first time information, and to the second log information indicating a history of operation of the second database and includes the second time information, and
determine whether the first result and the second result match by comparing a result corresponding to the first time included in the first result and a result corresponding to the second time included in the second result.

12. The control apparatus according to any of claims 10 or 11,
wherein the setting unit is configured to delete the first database.

13. The control apparatus according to any of claims 10 or 11,
wherein the time correction unit is configured to delete the second database when the first result of the processing on the first database and the second result of the processing on the second database do not match.

14. An information processing program that causes a processor included in an information processing device to execute a process, the process comprising:
generating a second database in which recorded contents of a first database are copied, when detecting an update program used to update a first control program configured to control the first database set as a transmission destination of a request for processing transmitted by the terminal apparatus;
generating a second control program by updating the first control program using the update program;
setting the transmission destination of the request to both the first database and the second database;
executing the processing on the first database using the first control program;
executing the processing on the second database using the second control program;
setting the transmission destination to only the second database among the first database and the second database when a first result of the processing on the first database and a second result of the processing on the second database match; and
executing processing on the second database using the second control
program when receiving the request from the terminal apparatus.
